# EUROPEAN PATENT APPLICATION

(11) **EP 4 502 096 A1**
(43) Date of publication of application: **05.02.2025**
(21) Application number: 23382804.5
(22) Date of filing: 01.08.2023
(51) Int. Cl.: C09J 5/04, C08K 5/09, C08K 5/29, C09J 7/30, C08F 12/20, C08F 220/18, C09J 151/00

(54) **A SEPARABLE FASTENER SYSTEM**

(71) Applicant: Universidad Autónoma De Madrid (UAM), 28049 Madrid (ES)
(72) Inventor: González Rodríguez, David, Madrid (ES); Araujo Morera, Javier, Madrid (ES); Martos Maldonado, Manuel Cristo, Madrid (ES); Conde Fernandes, Ana Margarida, Madrid (ES)
(74) Representative: Pons

(57) **Abstract**

The invention relates to a novel adhesive technology and more particularly, to a separable fastener system based on the functionalization of two copolymers, that could be functionalized and then processed on a surface, or the opposite, processed on a surface and then functionalized in order to generate high hetero-/homo-adhesion ratio and low moisture sensitivity, due to a good combination of H-bonding and ionic interactions, preferably functionalizing the polymeric surface without modifying the bulk material, as well as its procedure for obtainment and their uses as adhesive.

## Description

The invention relates to a novel adhesive technology and more particularly, to a separable fastener system based on the functionalization of two copolymers, that could be functionalized and then processed on a surface, or the opposite, processed on a surface and then functionalized in order to generate high hetero-/homo-adhesion ratio and low moisture sensitivity, due to a good combination of H-bonding and ionic interactions, preferably functionalizing the polymeric surface without modifying the bulk material, as well as its procedure for obtainment and their uses as adhesive.

### BACKGROUND ART

The study of adhesion phenomena has established a potent and very broad technology nowadays, offering innovative solutions to a wide range of applications (such as, packaging and consumer goods; automotive, aircraft and metal processing; electronics; medicine and hygiene; building and furniture, etc), and providing craftsmen and private consumers with easy-to-use technically-advanced products. The diversity of adhesive formulations is enormous and can be classified in many different ways: bonding mechanism (physical hardening, chemical curing, pressure sensitive,...), chemistry employed (cyanoacrylates, polyurethane or epoxy resins,...), or adhesion force and sensibility (soft, structural, thermosensitive,...). For every application in which two elements need to be fastened together, a specific adhesive can in principle be formulated.

On the other hand, the development of materials with adaptive behaviour or reversible connectivity using the tools and concepts of supramolecular chemistry is receiving increased attention during the last years. [Herbert, K.M., et al., 50th anniversary perspective: Solid-state multistimuli, multiresponsive polymeric materials. Macromolecules, 2017. 50(22): p. 8845-8870] Supramolecular chemistry profits from the information encoded in the functional groups of molecules and promotes noncovalent interactions between them to accomplish selective molecular recognition and complex self-assembly processes. Self-assembly and molecular recognition phenomena are ubiquitous in natural systems, and in some cases, adhesion is the resulting property.

At the moment we can found in the literature diverse mechanisms to design synthetic supramolecular adhesives with stimuli-responsive properties. [Heinzmann, C., C. Weder, and L.M. de Espinosa, Supramolecular polymer adhesives: advanced materials inspired by nature. Chemical Society Reviews, 2016. 45(2): p. 342-358] To such end, several noncovalent interactions have been exploited: metal-ligand binding, the formation of inclusion complexes, or hydrogen (H)-bonding interactions. The latter, and in particular those interactions formed from heterocyclic units that present multiple H-bonding donor and acceptor atoms, are particularly attractive due to their high directionality, tuneable strength, and ease of incorporation in (macro)molecular residues. It is therefore not surprising that most supramolecular systems exhibiting adhesive properties employ H-bonding interactions. [Heinzmann, C., C. Weder, and L.M. de Espinosa, Supramolecular polymer adhesives: advanced materials inspired by nature. Chemical Society Reviews, 2016. 45(2): p. 342-358].

The above-mentioned heterocyclic units or fragments can be designed to exhibit a *self-complementary* H-bonding pattern, so that one binding unit (A, for instance) can establish multiple H-bonding interactions with other units of the same kind.

On the contrary, the H-bonding motifs employed for establishing noncovalent contacts (for instance A and B) can be designed to present *hetero-complementary* patterns, like in the present material. This means that unit A binds to unit B to form the interaction A:B with higher strength than any other possible interaction, including for instance A:A or B:B interactions. Such hetero-complementary adhesion has so far been achieved and commercially addressed through physical means. Well-known materials/methods that can weakly and reversibly fasten two complementary pieces make use of *magnetic* (*e.g.* the closing mechanism of some purses) or *mechanic* interactions, such as the matching of two surfaces that are complementary in size and shape (*e*.*g*. grip seals in bags for food packaging or DVD cases) or the famous Velcro^{®} (used mainly in textiles). The latter is an easily recognizable material that illustrates the concept of hetero-complementarity of molecular fragments developed herein, but at the macroscopic scale. Velcro^{®} comprises two distinct surfaces that feature tiny "hooks" and "loops", respectively. The hook or the loop surface does not exhibit strong adhesion properties by itself, but when the two components are lightly *pressed* together, the hooks catch in the loops and the two pieces fasten. They can be separated again by pulling or peeling the two pieces apart and this bonding-debonding process can be repeated multiple times. The strength of this mechanical interaction can be classified as *weak* but, due to the high *reversibility* of the process and the *complementarity* of the surfaces, Velcro^{®} has succeeded in finding numerous applications and is part of our everyday life.

Hetero-complementary H-bonding units can induce the selective coating of a glass substrate with polymer chains, providing each material is functionalized with the corresponding unit in the H-bonding hetero-complementary pair (A and B in the examples above). Concretely, Long's group exploited this concept to produce adenine-functionalized glass substrates that showed a stronger binding with complementary thymine-functionalized polystyrene chains than with hydroxyl-terminated polystyrene. [Viswanathan, K., et al., Multiple hydrogen bonding for reversible polymer surface adhesion. Langmuir, 2006. 22(3): p. 1099-1105.] The formation of the A:T hydrogen bonds was confirmed by X-ray photoelectron spectroscopy and through the increase in the water contact angle as the hydrophobic PS polymer is attached to glass. However, no macroscopic adhesion between two materials was actually demonstrated.

An important drawback of utilizing polymers that are chemically functionalized with H-bonding heterocyclic units for surface adhesion phenomena is that most of these units remain embedded within the material, establishing strong H-bonding interactions, and only a small percentage of them are unbound and exposed at the material's surface, so as to contribute to adhesion processes. This typically leads to a drastic modification of the material's properties, which may turn insoluble or unprocessable as a result of the multiple strong interactions established between polymer chains. Obviously, it would be highly desirable to concentrate these H-bonding moieties at the material's surface while leaving the bulk material's core unmodified.

In view of the state of the art in the field, the strategy of using H-bonding units to enhance the hetero-complementary adhesion between polymer materials is clearly still far from being relevant enough to reach the market. Despite the concept of producing materials that function as Velcro^{®}, but with a molecular mechanism, is very appealing and has been successfully demonstrated, the examples described in the recent literature only reach adhesion enhancements of about twice of the adhesion obtained without one of the complementary units, in the best scenario. In addition, adhesion between different polymer surfaces was not studied, as well as no evidence to utilize supramolecular polymers as adhesives [WO2010002262A1].

### SUMMARY OF THE INVENTION

The present invention discloses a novel adhesive technology based on the functionalization of two different polymers or polymeric surfaces producing materials where bonding:
1) Operates under a pressure-sensitive contact mechanism.
2) Can be classified as weak (soft adhesives).
3) Is reversible: repetitive bonding/debonding can occur by application of pressing/pulling mechanical forces.
4) Takes place between the two different complementary surfaces much more strongly (i.e. > 10 times) than between each individual surface.

The invention employs complementary carboxylate:amidinium H-bonding units.

This H-bonding pair stands out to potentially fulfil the requirements of high hetero-/homo-adhesion ratio and low moisture sensitivity, due to a good combination of H-bonding and ionic interactions. In such "charge-assisted H-bonded pair" (often called "*salt bridge*") the H-bonds are reinforced by an oppositely charged interface between an anion (preferably a compound with carboxylate groups) and a cation (preferably a compound with amidinium groups). Conceptually, the incorporation of charged H-bonding units can be a successful strategy to enhance hetero-complementarity, due to Coulombic attraction between cations and anions, and disfavour homo-complementarity, due to Coulombic repulsion between negative charges, on one hand, and positive charges, on the other. Moreover, ionic interactions work very efficiently in water, so they would not be significantly affected by moisture. The amidinium:carboxylate interaction is reminiscent of the natural guanidinium:carboxylate interactions found in arginine-aspartane bridges, RNA stem loops, zinc finger-DNA complexes, and in the active sites of manifold enzymes.

In addition, preferentially, but not exclusively, the polymer surface is functionalized without modifying the bulk material. In order to covalently bind the hydrophobic polymer (surfaces) and the amidinium or carboxylate "stickers", we will make use of the "click"-type reaction between a thiolate, generated *in situ* from a thiol and a base, and a pentafluorophenyl group incorporated as a pentafluorostyrene co-monomer in the polymer material. This reaction has been previously employed to functionalize polymers [Delaittre, G. and L. Barner, The para-fluoro-thiol reaction as an efficient tool in polymer chemistry. Polymer Chemistry, 2018. 9(20): p. 2679-2684], but never to modify polymer surfaces with H-bonding/ionic moieties and never for the purpose of originating/enhancing polymer adhesion.

At the same time, such pristine polymer material will be prepared (preferentially, but not exclusively) by the aqueous emulsion co-polymerization of acrylic monomers and pentafluorostyrene.

Thus, a first aspect of the present invention related to a separable fastener system characterized in that it comprises two elements, a first element and a second element, wherein each of the first element and the second element comprises a hydrophobic polymer surface grafted with a positive ionic compound or a negative ionic compound, wherein the positive ionic compound or the negative ionic compound of the first element is configured, in use, to be bound to the negative ionic compound or the positive ionic compound, respectively, of the second element.

The term "hydrophobic polymer" as used herein refers to any polymers that have a static contact angle of water ([theta] or [Θ]) of 90 DEG or more.

In a preferred embodiment have at least one different charge on the first and second element surface.

A preferred embodiment of the separable fastener system the element is selected from a sheet, a film, and any other bulk material that has at least a planar surface.

In another preferred embodiment the hydrophobic polymer surface comprises a copolymer obtained from polymerization of two different olefin monomers M1 and M2, one of them comprising a pentafluorophenyl group.

In another preferred embodiment the hydrophobic polymer is obtained by polymerization of two different olefin monomers M1 and M2, being one of them pentafluorostyrene.

In another preferred embodiment the surface polymer has a plurality of copolymers grafted with a positive ionic compound or a negative ionic compound.

In another preferred embodiment the other monomer is selected from aromatic or aliphatic acrylic or methacrylic monomer; and wherein M2 monomer is an olefin substituted by a pentafluorophenyl group, preferably pentafluorophenyl acrylic monomer.

In other preferably embodiment the distribution of M1 and M2 along the polymer chain can be random, alternate or in the form of block copolymers.

A further embodiment, M1 monomer is aliphatic acrylate monomer of the general formula: 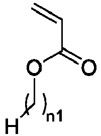 preferably n1 is an integer between 1 and 12, more preferably n1 is between 1 and 6, wherein n=1 is methyl- (MA), n=2 is ethyl- (EA), n=4 is butyl- (BA) or n=6 is hexyl-acrylate (HA), and even more preferably n is 4; and
wherein M2 monomer is pentafluorostyrene of the general formula:

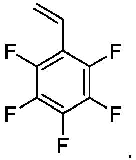

In other preferably embodiment, the copolymer has the following 2 monomers M1 and M2 with a distribution along the polymer chain is random, alternate or in the form of block copolymers: 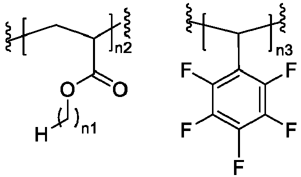 wherein n1=1-12, and n2 and n3 can be any number, reaching average molecular weights from 100 to 100.000.

In other more preferably embodiment, the copolymer has the following formula: 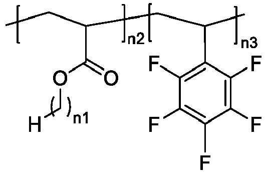 wherein n1=1-12, and n2 and n3 can be any number, reaching average molecular weights from 100 to 100.000.

The advantage of the acrylic component is decreasing the Tg, so the polymer is softer and adhesive properties arise.

In another preferably embodiment the negative ionic compound grafted in the polymer surface of the second element are selected from a compound containing carboxylate, sulfonate or phosphate groups, hereinafter the grafted negative ionic compound is referred to as carboxylate groups (**C**) or carboxylate (**C**) or (**C**), and/or the positive ionic compound grafted in the polymer surface of the first element are selected from a compound containing amidinium and/or guanidinium group (**A**), hereinafter the grafted positive ionic compound is referred to as amidinium groups (**A**) or amidinium (**A**) or (**A**), wherein the compound (**C**) and (**A**) are covalently bonded to the hydrophobic polymer.

In a more preferably embodiment carboxylate (**C**) and amidinium (**A**) derivatives are in its neutral or ionic form. In an even more preferably embodiment carboxylate (**C**) and amidinium (**A**) derivatives are aromatic or aliphatic derivatives.

In an even much more preferred embodiment, the grafted carboxylate (**C**) moiety is a carboxylate, or sulfonate or a phosphate group; more preferably the carboxylate (**C**) has the general formula: 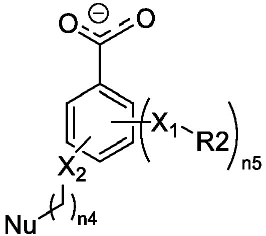 (X₁-R2)ₙ₅ substituents at ortho- or meta positions with respect to the carboxylate group, wherein:
n5 is an integer between 0 to 4, wherein:
X1 is O, N or S,
R2 is selected from an c1-c6 alkyl group, phenyl, benzyl or fluorocarbon chain with formula CₙF₂ₙ₊₁ wherein n is an integer between 1 and 6;
and wherein X2-(CH₂)ₙ₄-Nu is a substituent at *ortho-, meta-* or *para-* position with respect to the carboxylate, preferably *para-,* wherein
Nu is selected from thiol (-SH), an alcohol (-OH) and an amine (-NH₂), more preferably thiol;
X₂ is selected from -CH₂-, - O-, -N-, and -S-, and
n4 is an integer between 1 and 12.

In an even much more preferred embodiment, the grafted carboxylate (**C**) moiety has the general formula: 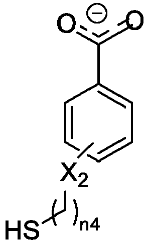 wherein X2-(CH₂)ₙ₄-SH is a substituent at *ortho-, meta-* or *para-* position with respect to the carboxylate group, preferably *para-,* wherein
X₂ is selected from -CH₂-, - O-, -N-, and -S-, and
n4 is an integer between 1 and 12.

In an even much more preferably embodiment, the grafted (**C**) moiety is selected from o-(3-mercaptopropoxy)benzoic acid, m-(3-mercaptopropoxy)benzoic acid and p-(3-mercaptopropoxy)benzoic acid, more preferably is p-(3-mercaptopropoxy)benzoic acid with formula:

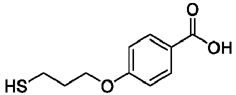

In another even much more embodiment, amidinium groups (**A**) is a guanidinium or an amidinium derivative and has the general formula: 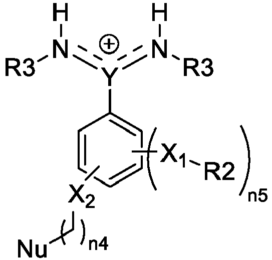 (X₁-R2)ₙ₅ substituents at ortho- or meta positions with respect to the amidinium/guanidinium group, wherein:
n5 is an integer between 0 to 4, wherein:
X1 is O, N or S,
R2 is selected from an c1-c6 alkyl group, phenyl, benzyl or fluorocarbon chain with formula CₙF₂ₙ₊₁ wherein n is an integer between 1 to 6;
and wherein X2-(CH₂)ₙ₄-Nu is a substituent at *ortho-, meta-* or *para-* position with respect to the amidinium/guanidinium, preferably *para-,* wherein Nu is selected from thiol (-SH), an alcohol (-OH) and an amine (-NH₂), more preferably thiol,
X₂ is selected from -CH₂-, - O-, -N-, and -S-, and
wherein Y = C or N; more preferably Y=C; and
wherein R3 is selected from hydrogen (H), c1-c6 alkyl group, phenyl or benzyl.

In an even much more preferably embodiment, the grafted (**A**) moiety has the general formula: 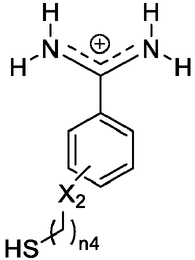 wherein X2-(CH₂)ₙ₄-SH is a substituent at *ortho-, meta-* or *para-* position with respect to the amidinium group, preferably *para-,* wherein
X₂ is selected from -CH₂-, - O-, -N-, and -S-, and
n4 is an integer between 1 and 12.

In an even much more preferably embodiment, the grafted (**A**) moiety is selected from o-(3-mercaptopropoxy)benzenecarboximidamide, m-(3-mercaptopropoxy)benzenecarboximidamide and p-(3-mercaptopropoxy)benzenecarboximidamide, more preferably is p-(3-mercaptopropoxy)benzenecarboximidamide with formula:

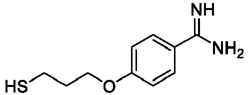

The second aspect of the present invention is a process to obtain separable fastener system characterized in that it comprises the following steps:
I. synthesizing a polymer by a polymerization reaction, preferably the polymerization is an aqueous emulsion radical co-polymerization method; and
II. grafting a positive ionic compound or a negative ionic compound on the polymer obtained in step (I), wherein the grafting is selected from a grafting reaction in solution and grafting reaction on film surface.

In a preferably embodiment the polymerization method of step (I) is aqueous emulsion radical polymerization method comprising the following steps:
a) adding monomer ratios from 0/100 to 100/0 to a solution containing the emulsifier in deionized water and purging the mixture with inert gas, preferably Argon;
b) heating the mixture obtained in (a) to a temperature of between 50 ºC and 80 ºC, and then injecting the initiator in a shot;
c) reacting for a time between 12 h and 36 h under constant stirring the heated mixture obtained in (b);
d) extracting the polymer or copolymers obtained in (c), concentrating, and then washing the polymer 2-3 times with methanol and filtering and dried under vacuum of between 100 and 1 mbar.

The final monomer conversion was calculated by gravimetry. Preferably the number-average molecular weight (Mₙ) and polydispersity index (PDI) ranged from 70 to 50000 and from 1 to 5.5.

In a standard reaction of a 100/0 to 0/100 monomer ratio was dissolved in appropriate solvent in a round-bottomed flask equipped with a magnetic stir bar under Argon atmosphere, and initiator was added until complete dissolution. Then, the reaction flask was placed in an oil bath at conventional temperatures, and the mixture was stirred at this temperature for a standard period of time under argon atmosphere. The reaction was stopped by cooling down to room temperature, before suitable solvent was added to precipitate the copolymer. The final product was washed with an appropriate solvent, filtered by removing the supernatant, and dried under high. The final monomer conversion was calculated by gravimetry.

In another more preferably embodiment, the polymerization of step (a) is carried out using solution free radical copolymerization comprising the following steps:
a') dissolving a 100/0 to 0/100 monomer ratio in a solvent with stirring under inert atmosphere, preferably argon;
b') adding an initiator in the mixture obtained in step (a) until complete dissolution and heating at temperature of between 60 and 80 ºC for a time of at least 20 hours stirring;
c') adding a solvent, filtering and dried under vacuum of between 100 and 1 mbar.

In a preferably embodiment of the step (b) of the present invention the grafting is selected from a grafting reaction in solution and grafting reaction on film surface.

In a more preferably embodiment, the reaction on film surface comprising the following steps:
i. dissolving the copolymer obtained before in haloform and evaporating the haloform;
ii. adding the positive ionic compound or a negative ionic compound in methanol and dropwise adding to the copolymer of the step (a);
iii. reacting the mixture for at least 45 hours in a temperature of between 20 and 40 ºC in an inert atmosphere;
iv. washing with acidic methanol, methanol and drying under vacuum of between 100 and 1 mbar.

In another preferably embodiment the reaction on film surface comprising the following steps:
i) dissolving the polymer or copolymer obtained in step (I) in haloform and evaporating the haloform, preferably chloroform;
ii) adding the positive ionic compound or a negative ionic compound in methanol and dropwise adding to the polymer or copolymer of the step (i);
iii) reacting the mixture obtained in step (ii) for at least 45 hours in a temperature of between 20 and 40 ºC in an inert atmosphere;
iv) washing with acidic methanol the product obtained in step (iii), methanol and drying under vacuum of between 100 and 1 mbar.

Different grafted copolymers of poly(M1-co-M2)-g-A and poly(M1-co-M2)-g-C were synthesized by varying the monomer ratio of the precursor's copolymers. In a standard reaction, the precursor copolymer poly(M1-co-M2) was dissolved in appropriate solvent in a round-bottomed flask equipped with a magnetic stir bar under argon atmosphere until complete dissolution. Then, a catalyst was added to the mixture. Afterwards, A or C was dissolved in a suitable solvent and added to the reaction flask. The reaction was allowed to react during conventional temperatures for a standard period of time. After solvent was evaporated and the residue was purified by precipitation in suitable and then washed with solvent. The final product was filtered by removing the supernatant and dried under high vacuum.

A third aspect of the present invention is the use of the separable fastener system as an adhesive of different planar surfaces of different nature element with weight up to 0.5 kg selected from metal, glass, or plastic.

An article comprising two substrates coated of the separate system described above, wherein the substrates are selected independently each one from glass, paper, wood, plastic, brick or metal.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings are provided by way of illustration and are not intended to be limiting of the present invention.

### BRIEF DESCRIPTION OF THE DRAWINGS

**Fig. 1****. Schematic Illustration of the preparation of diverse acrylic based copolymers via emulsion polymerization (Example 1)**
**Fig. 2****. Schematic Illustration of the grafting reaction in solution (Example 3.2)**

### EXAMPLES

### Example 1. Synthesis of copolymers by Emulsion Copolymerization.

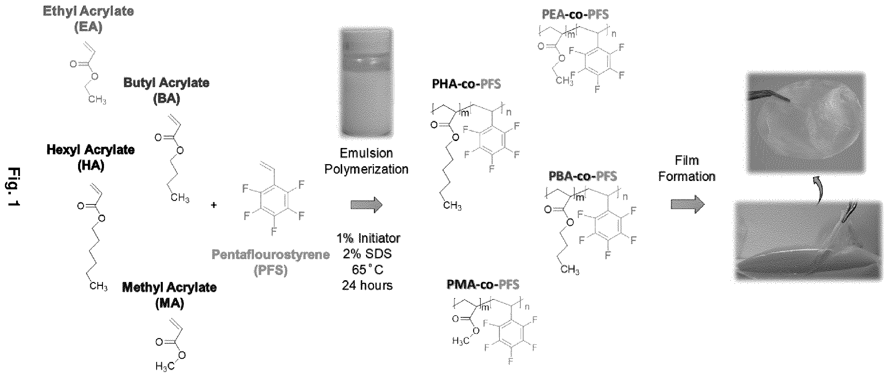

Different random copolymers PolyAlkylAcrylate-co-PentaFluoroStyrene (PAA-co-PFS) is prepared by aqueous emulsion polymerization by varying the amount of monomers in the system (AA or PFS; see **Fig. 1**). In a standard reaction, 10% w/w solid content latexes including the water, with monomers of different acrylic nature (Methyl Acrylate (MA), Ethyl Acrylate (EA), Butyl Acrylate (BA), Hexyl Acrylate (HA)) and pentafluorostyrene (PFS) using monomer molar ratios (AA/PFS) of 95/5, 90/10, 80/20, 70/30 or 50/50 (see **Table 1**) were added to a solution containing the emulsifier (SLS, 2% wbm, where wbm is the weight based on the monomer weight) in deionized water (Milli-Q quality) and the mixture was purged with Argon for 15 minutes. The mixture was heated to 65 °C, and then the initiator (KPS or AIBN, 1% wbm) was injected in a shot. The polymerization was allowed to react for 24 h under constant stirring (330 rpm). After the synthesis, the copolymers can be extracted from water solution by extracting with chloroform to concentrate the copolymer particles from water solution, concentrating, and then washing the polymer several times with methanol. The final product was filtered and dried under vacuum to yield a white, sticky solid. The final monomer conversion was calculated by gravimetry. The final monomer composition was calculated by integration of the ¹H NMR (nuclear magnetic resonance) signals, average molecular weights (Mₙ) and polydispersities (PDI) were calculated by GPC (gel permeation chromatography) analysis, glass transition temperatures (T_{g}) were calculated by DSC (differential scanning calorimetry). Some representative data is collected in **Table 1** below.

Different random copolymers PolyAlkylAcrylate-co-PentaFluoroStyrene (PAA-co-PFS) are prepared by aqueous emulsion polymerization (see **Fig. 1**) by varying the relative amount of AA / PFS monomers in the system, wherein AA are monomers of different acrylic nature (Methyl Acrylate (MA), Ethyl Acrylate (EA), Butyl Acrylate (BA), Hexyl Acrylate (HA)) and PFS is pentafluorostyrene, and using monomer molar ratios (AA/PFS) of 95/5, 90/10, 80/20, 70/30 or 50/50 (see **Table 1**).

In a standard reaction using BA/PFS 90:10 as an example, 8,56 g of BA and 1,44 g of PFS (10% w/w solid content latexes including the water), were added to a solution containing 0,2 g of the emulsifier (SLS, 2% wbm, where wbm is the weight based on the monomer weight) in 90 mL of deionized water (Milli-Q quality) and the mixture was purged with Argon for 15 minutes. The mixture was heated to 65 °C, and then 0,1 g (1% wbm) of the AIBN initiator (Azobisisobutyronitrile: alternatively, Potassium persulfate (KPS) can be used) was injected in a shot. The polymerization was allowed to react for 24 h under constant stirring (330 rpm). After the synthesis, the copolymer can be extracted from water solution by extracting with chloroform to concentrate the copolymer particles from water solution, concentrating, and then washing the polymer several times with methanol. The final product was filtered and dried under vacuum to yield a white, sticky solid. The final monomer conversion was calculated by gravimetry. The final monomer composition was calculated by integration of the ¹H NMR (nuclear magnetic resonance) signals, average molecular weights (Mₙ) and polydispersities (PDI) were calculated by GPC (gel permeation chromatography) analysis, glass transition temperatures (T_{g}) were calculated by DSC (differential scanning calorimetry). Some representative data is collected in **Table 1** below.

**Table 1. Summary of structural properties and glass transition temperature (T_{g}) of the synthesized and grafted (g) copolymers.**

| Entry | Monomers ratio | Initiator ^{[a]} | Final Conversion % | Final Composition^{[b]} % | ***M*ₙ** kDa | **PDI** | ***T*_{g}** °C | **T*_{g}* A**^{[f]} °C | ***T*_{g} C**^{[f]} °C |
|---|---|---|---|---|---|---|---|---|---|
| **1** | BA/PFS (95:5) | AIBN | 90 | 97:3 | ^{[e]} | ^{[e]} | -46 | -40 | -43 |
| **2** | BA/PFS (90:10) | AIBN | 90 | 91:9 | ^{[e]} | ^{[e]} | -42 | -32 | -35 |
| **3** | BA/PFS (80:20) | AIBN | 90 | 83:17 | ^{[e]} | ^{[e]} | -37 | -17 | -15 |
| **4** | BA/PFS (80:20)^{[c]} | AIBN | 92 | 80:20 | 627 | 2.1 | ^{[e]} | | |
| **5** | BA/PFS (70:30) | AIBN | 89 | 66:34 | 107 8 | 5.5 | -33 | -8 | -10 |
| **6** | BA/PFS (70:30)^{[d]} | AIBN | 99 | 74:26 | 70 | 2 | -34 | | |
| **7** | EA/PFS (90:10) | AIBN | 82 | 85:15 | 110 | 7.4 | -13 | -6 | -13 |
| **8** | EA/PFS (80:20) | AIBN | 79 | 79:21 | 297 | 3.3 | -10 | -3 | -1 |
| **9** | HA/PFS (90:10) | AIBN | 50 | 92:8 | ^{[e]} | ^{[e]} | -51 | -48 | -52 |
| **10** | MA/PFS (95:5) | KPS | 99 | 94:4 | 295 | 4.3 | -2 | 6 | 5 |
| **11** | MA/PFS (90:10) | KPS | 99 | 91:9 | ^{[e]} | ^{[e]} | 4 | 17 | 18 |
| **12** | MA/PFS (80:20) | KPS | 99 | 78:22 | 508 | 3.4 | 10 | 41 | 40 |
| **13** | MA/PFS (50:50) | KPS | 98 | 52:48 | 416 | 3.7 | 35 | 51 | 52 |

| | | | | | | | | | |
|---|---|---|---|---|---|---|---|---|---|
| ^{[a]} 1% with respect to total monomer amount. ^{[b]} The final copolymer composition was calculated by ¹H NMR. See an example in Figure 2. ^{[c]} Comonomers were fed during 4 hours. ^{[d]} The copolymerization was performed in solution. ^{[e]} Not calculated. ^{[f]} Data from copolymers grafted with thiols **A** or **C.** | | | | | | | | | |

For example, 5 grams of Methyl Acrylate (MA) are added with 5 grams of pentafluorostyrene (PFS) in 90 grams of water (Milli-Q quality). Also, 0.2 grams of SLS are added to the mixture. The mixture was purged with Argon for 15 minutes. The mixture was heated to 65 °C, and then, 0.1 g of KPS initiator was injected in a shot. The polymerization was allowed to react for 24 h under constant stirring (330 rpm). After the synthesis, the copolymers can be extracted from water solution by extracting with chloroform to concentrate the copolymer particles from water solution, concentrating, and then washing the polymer several times with methanol. The final product was filtered and dried at 50 mbar to yield a white, sticky solid.

The specific copolymer obtained is PMA-co-PFS:

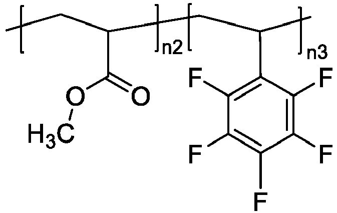

### Example 2. Synthesis of copolymers by Solution Free Radical Copolymerization.

In a standard reaction 50 wt.% (where wt. is the total weight) of a 70/30 monomer ratio (BA/PFS) was dissolved in anhydrous THF in a round-bottomed flask equipped with a magnetic stir bar under Argon atmosphere, and AIBN 1% wbm was added until complete dissolution. Then, the reaction flask was placed in an oil bath at 70 °C, and the mixture was stirred at this temperature for 24 hours under argon atmosphere. The reaction was stopped by cooling down to room temperature, before cold methanol was added to precipitate the copolymer. The final product was washed with methanol, filtered by removing the supernatant, and dried under high vacuum to yield a clear, sticky solid. The final monomer conversion was calculated by gravimetry.

### Example 3. Functionalisation (Grafting (g)) of the copolymer obtained in example 1 or 2 with carboxylate (C) or an amidinium (A) derivative.

### 3.1. Synthesis of carboxylate (C) or amidinium (A) derivatives

The synthesis of the thiol-amidine (A) and thiol-acid (C) was performed in a straightforward approach. (Scheme 1)

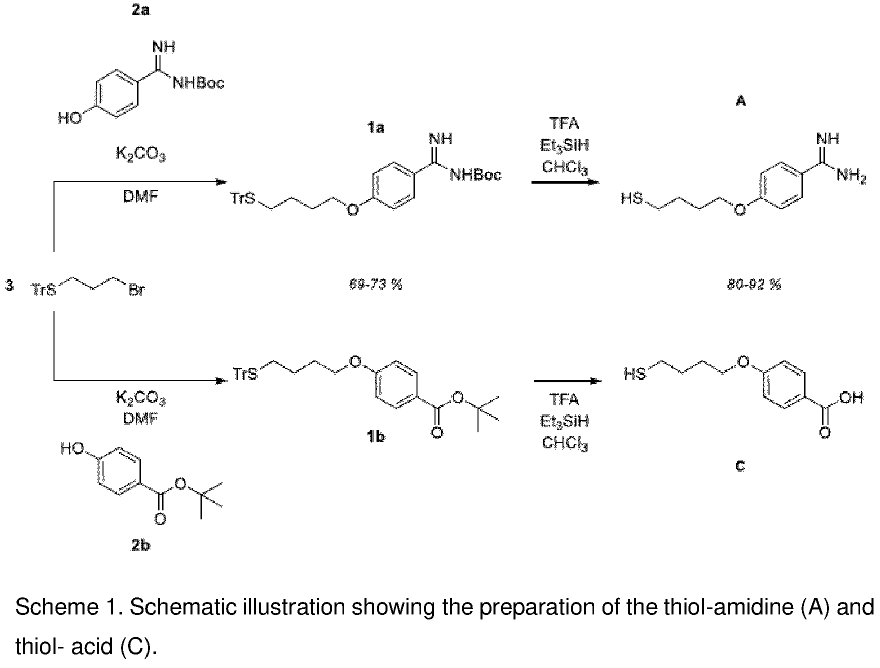

### 3.1.1. Preparation of tert-butyl (imino(4-(3- (tritylthio) propoxy) phenyl) methyl) carbamate (1a)

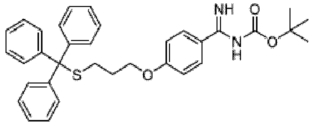

For the synthesis of tert-butyl (imino(4-(3-(tritylthio)propoxy)phenyl)methyl)carbamate (**1a**): N- Boc p-amidinophenol (**2a**, 1.90 g, 8.04 mmol) and (3-bromopropyl)(S-trityl)sulfane (**3**, 5.11 g., 12.87 mmol, 1.6 equiv.) were stirred in 40 mL of DMF at r.t. for 10 min and then, K₂CO₃ (2.22 g,16.08 mmol, 2 equiv.) was added. The mixture was stirred at r.t. for 24 h. After that, the solvent was removed under reduced pressure and the crude was purified by column chromatography on silica (cyclohexane/ethyl acetate 8:2) to obtain **1a** (3.05 g, 5.52 mmol, 69 %) as a white solid.

¹H NMR (300 MHz, CDCl3) δ 7.80 - 7.70 (m, 2H, Hortho), 7.40 - 7.27 (m, 6H, Htrityl), 7.27 - 7.06 (m,9H, Htrityl), 6.88 - 6.71 (m, 2H, Hmeta), 3.87 (t, 3J1,2 = 6.2 Hz, 2H, H1), 2.29 (t, 3J2,3 = 7.0 Hz, 2H, H3),1.75 (dt, 3J1,2 = 6.2 Hz, 3J2,3 = 7.0 Hz, 2H, H2), 1.48 (s, 9H, CH3).

¹³C NMR (75 MHz, CDCl3) δ 162.09 (CO2), 144.80(Cipso-Trityl), 129.59 (Cortho), 128.99 (Cmeta-Trityl),127.92 (Cortho-Trityl), 126.69 (Cpara-Trityl), 114.40 (Cmeta), 77.25 (C(CH3)3), 66.69 (CPh3), 66.35 (C1),28.32 (C2/C3), 28.27 (CH3), 28.18 (C2/C3). Three 13C resonances were not detected.

HRMS (ESI-TOF): Calculated for C34H37N2O3S: 553.2525 [M+H]+; Found: 553.2519.

### 3.1.2. Preparation of t-butyl p-[3-(tritylthio)propoxy]benzoate (1b) (HRMS)

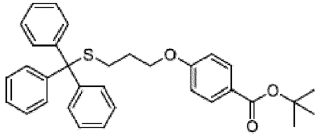

(3-bromopropyl)(S-trityl)sulfane (**3**, 3.40 g, 8.56 mmol), and tert-butyl 4-hydroxybenzoate (**2b**, 4.99 g, 25.67 mmol, 3 equiv.) and K₂CO₃ (7.10 g, 6 equiv.) were suspended in DMF and the mixture was stirred at r.t. for 3 days. Then, the solvent was removed under reduced pressure and the crude was purified by column chromatography on silica (cyclohexane/CHCl3 1:1) to obtain 3.20 g (6.27 mmol, 73 %) of **1b** as colorless viscous oil.

¹H NMR (300 MHz, CDCl3) δ 7.89-7.76 (m, 2H, Hortho), 7.41-7.26 (m, 6H, Htrityl), 7.23-7.05 (m, 9H, Htrityl), 6.80-6.66 (m, 2H, Hmeta), 3.86 (t, 3J1,2 = 6.1 Hz, 2H, H1), 2.29 (t, 3J2,3 = 7.1 Hz, 2H, H3), 1.74 (dt, 3J1,2 = 6.1 Hz, 3J2,3 = 7.1 Hz, 2H, H2), 1.50 (s, 9H, CH3).

¹³C NMR (75 MHz, CDCl3) δ 165.76 (CO2), 162.31 (Cpara), 144.91 (Cipso-Trityl), 131.43 (Cortho), 129.68 (Cmeta-Trityl), 128.00 (Cortho-Trityl), 126.76 (Cpara-Trityl), 124.51 (Cipso), 113.99 (Cmeta), 80.61 (C(CH3)3),
66.76 (CPh3), 66.37 (C1), 28.44 (C2/C3), 28.39 (CH3), 28.28 (C2/C3).

HRMS (ESI-TOF): Calculated for C33H34NaO3S: 533.2126 [M+Na]+; Found: 533.2130.

### 3.1.3. Preparation of p-(3-mercaptopropoxy)benzenecarboximidamide (A)

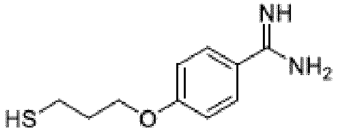

p-(3-mercaptopropoxy)benzenecarboximidamide (A): 1a (3.00 g, 5.43 mmol) was dissolved in CHCl₃ (50 mL) at r.t., Et₃SiH (20 mL, 124.83 mmol, 23 equiv.) was added and then trifluoroacetic acid* (30 mL, 396.21 mmol, 73 equiv.) dropwise. A transient yellow colour was observed during addition of trifluoroacetic acid. The mixture was stirred at room temperature for 2 h. After that, cyclohexane/diethyl ether 1:1 was added slowly until a white precipitate was formed. The precipitate was filtered off and washed with cyclohexane/diethyl ether 1:1 (small volume) and cyclohexane. The precipitate was collected and dried under vacuum to obtain 1.05 g of A (4.99 mmol, 92 %) as a white solid.

¹H NMR (300 MHz, DMSO-d6) δ 9.15 (bs, 2H, NH2), 9.05 (bs, 2H, NH2), 7.82 (d, 3Jo,m = 8.9 Hz, 2H, Hortho), 7.17 (d, 3Jo,m = 8.9 Hz, 2H, Hmeta), 4.18 (t, 3J1,2 = 6.2 Hz, 2H,CH2O), 2.64 (dt, 3J2,3 = 7.0 Hz, 3J3,SH = 7.4 Hz, 2H, CH2S), 2.49 (t, 3J3,SH = 7.4 Hz, SH, overlapped with solvent signal), 2.02 (tt, 3J1,2 = 6.2 Hz, 3J2,3 = 7.0 Hz, 2H, CH2CH2CH2).

¹³C NMR (75 MHz, DMSO) δ 164.71 (CNHNH2), 162.90 (Cpara), 130.18 (Cmeta), 119.62 (Cipso), 114.81 (Cortho), 66.33(CH2O), 32.60 (CH2-CH2-CH2), 20.35 (CH2S).

HRMS (ESI-TOF): Calculated for C10H15N2OS: 211.0905 [M+H]+; Found: 211.0906.

### 3.1.4. Preparation of p-(3-mercaptopropoxy)benzoic acid (C):

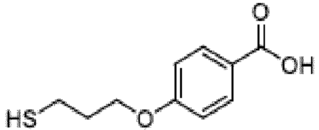

p-(3-mercaptopropoxy)benzoic acid (C): 1b (3.00 g, 5.87 mmol) was dissolved in CHCl₃ (50 mL) at r.t., Et3SiH (22 mL, 137.46 mmol, 23 equiv.) was added and then trifluoroacetic acid* (33 mL, 428.88 mmol, 73 equiv.) dropwise. A transient yellow color was observed during addition of trifluoroacetic acid. The mixture was stirred at room temperature overnight. After that, solvents were evaporated under vacuum and the crude was purified by column chromatography on silica (CHCl₃ to CHCl₃/Acetone 10:1) to obtain 1.00 g of C (4.71 mmol, 80 %) as a white solid.

¹H NMR (300 MHz, DMSO-d6) δ 12.57 (bs, 1H, CO2H), 8.37 - 7.66 (m, 2H, Hortho), 7.19 - 6.22 (2H, Hmeta), 4.07 (t, 3J1,2 = 6.1 Hz, 2H, CH2O), 2.58 (ddt, 3J2,3 = 6.9 Hz, 3J3,SH = 7.4 Hz, 3J3,SH = 8.4, 2H, CH2S), 2.38 (dd, 3J3,SH = 7.4 Hz, 3J3,SH = 8.4 Hz, 1H, SH), 1.95 (tt, 3J1,2 = 6.1 Hz, 3J2,3 = 6.9 Hz, 2H, CH2CH2CH2).

¹³C NMR (75 MHz, DMSO-d6) δ 166.96 (CO2H), 162.09 (Cpara), 131.32 (Cmeta), 122.92 (Cipso), 114.20 (Cortho), 65.95(CH2O), 32.69 (CH₂-CH₂-CH₂), 20.38 (CH2S).

HRMS (ESI-TOF): Calculated for C10H12NaO3S: 235.0405 [M+Na]+; Found: 235.0410. Calculated for: C₁₀H₁₃O₃S: 213.0585 [M+H]+; Found: 213.0578.

### 3.2. Preparation of grafted copolymers of PBA-co-PFS-g-A or PBA-co-PFS-g-C (g = grafted) in solution

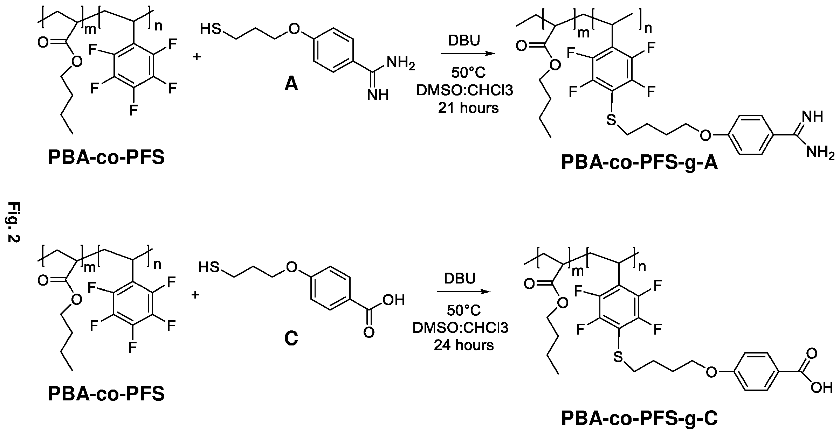

Different grafted (g) copolymers of PBA-co-PFS-g-A or PBA-co-PFS-g-C were synthesized by varying the monomer ratio of the precursors copolymers. In a standard reaction (**Fig. 2**), the precursor copolymer (PBA-co-PFS) (40 mg) obtained by the method described in example 1 or 2, having diverse monomer molar ratios (AA/PFS = 95/5, 90/10, 80/20, 70/30 or 50/50) as specified above, was dissolved in chloroform (2 mL) in a round-bottomed flask equipped with a magnetic stir bar under argon atmosphere until complete dissolution. Then, DBU (1,8-Diazabicyclo(5.4.0)undec-7-ene; 3 eq. with respect to pentafluorostyrene groups) was added to the mixture. Afterwards, A or C (A = p-(3-mercaptopropoxy)benzenecarboximidamide; C = p-(3-mercaptopropoxy)benzoic acid) (3 eq. with respect to pentafluorostyrene groups) was dissolved in DMSO (2 mL) and added to the reaction flask. The reaction was allowed to react during 1 day at 50 °C. After CHCl₃ was evaporated and the residue was purified by precipitation in acidic water (HCl 1M) or basic water (NaHCO₃ 1M) respectively, and then washed with methanol. The final product was filtered by removing the supernatant and dried under high vacuum to yield a yellow, sticky solid.

### 3.3. Grafting Reaction onto the Film Surface of Copolymers PBA-co-PFS

Different grafted copolymers of PBA-co-PFS-g-A or PBA-co-PFS-g-C (A = p-(3-mercaptopropoxy)benzenecarboximidamide; C = p-(3-mercaptopropoxy)benzoic acid) were synthesized onto the precursors dried films (Fig. 3). The precursor copolymer (PBA-co-PFS) (40 mg) was dissolved in chloroform (2 mL) and placed in a petri dish. After the evaporation of CHCl₃, A or C (1 eq. with respect to pentafluorostyrene groups) and DBU (1,8-Diazabicyclo(5.4.0)undec-7-ene; 2 eq. with respect to pentafluorostyrene groups) were dissolved in methanol (2 mL) and dropwise added onto the film surface. The mixture was allowed to react during 2 days at 30 °C in a closed system under argon atmosphere. The final film surface was washed with acidic methanol, then with methanol, and dried under high vacuum to yield a yellow solid.

### Example 4. ADHESION TESTS

*Ad hoc* qualitative adhesion tests were performed from these surface-functionalized films. Rectangular pieces, with a surface of approximately 2 cm x 1 cm and a thickness of 1 mm, were cut from the films of the A-grafted and C-grafted copolymers (A = p-(3-mercaptopropoxy)benzenecarboximidamide; C = p-(3-mercaptopropoxy)benzoic acid), prepared as described above (**Example 3.3**). Only one of the two surfaces of each film, hereafter called the "top surface", was functionalized with these H-bonding units. A control film was also prepared by treatment of the top surface under exactly the same conditions, but in the absence of thiol.

The functionalized "top surfaces" of the films, but not (or to a much lower extent) the "bottom" non-functionalized surfaces or the control films, were able to stick onto smooth planar surfaces of different nature, like metal, glass, or plastic. A part (1 cm x 1 cm) of the rectangular grafted films was pressed for 5 seconds onto standard 300 g weights with surfaces of different nature. The weights were suspended for longer than 1 min when pressed in contact with the top surfaces of the **A**-grafted and **C**-grafted copolymers. Glass and metal substrates were suspended longer (ca. 2 times longer; >2 mins) than plastic (silicone) substrates of the same weight. These adhesion experiments to the standard weights could be repeated at least 10 times with similar results. Bottom surfaces or control films could not withstand such weight at all.

Remarkably, the complementary surfaces of the films, *i.e.* carboxylate- and amidinium-functionalized surfaces, stick to each other stronger than all other tested surfaces. In this case, one of the rectangular films was attached mechanically to the standard weights, and the two complementary **A**- and **C**-modified surfaces were pressed together in the same way. In this way, the weight could be typically suspended for longer than >5 mins, >10 mins in the case of metal and glass substrates. These adhesion experiments to the standard weights could be repeated at least 10 times with similar results. When the interaction was made between top and bottom surfaces, a similar adhesion strength as in the direct adhesion experiments was noted (i.e. < 2 mins suspension time).

## Claims

1. A separable fastener system **characterized in that** it comprises two elements, a first element and a second element, wherein each of the first element and the second element comprises a hydrophobic polymer surface grafted with a positive ionic compound or a negative ionic compound, wherein the positive ionic compound or the negative ionic compound of the first element is configured, in use, to be bound to the negative ionic compound or the positive ionic compound, respectively, of the second element.

2. The separable fastener system according to claim 1, wherein the hydrophobic polymer surface comprises a copolymer obtained from polymerization of two different olefin monomers M1 and M2, one of them comprising a pentafluorophenyl group.

3. The separable fastener system according to any of claims 1 or 2, wherein the hydrophobic polymer is obtained by polymerization of two different olefin monomers M1 and M2, being one of them pentafluorostyrene.

4. The separable fastener system according to claim 2 or 3, wherein the other monomer is selected from aromatic or aliphatic acrylic or methacrylic monomer; and wherein M2 monomer is an olefin substituted by a pentafluorophenyl group, preferably pentafluorophenyl acrylic monomer.

5. The separable fastener system according to any of claims 2 to 4, wherein the distribution of M1 and M2 along the polymer chain is random, alternate or in the form of block copolymers.

6. The separable fastener system according to any claims 2 to 5, wherein M1 monomer is aliphatic acrylate monomer of the general formula: 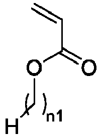 wherein n1 is an integer between 1 and 12; and/or
M2 monomer is pentafluorostyrene of the general formula:

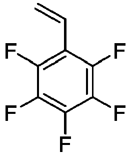

7. The separable fastener system according to any of claims 1 to 6, wherein the polymer has the following formula: 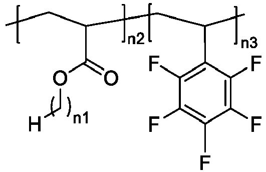 wherein: n1 is 1-12, and n2 and n3 can be any number, reaching average molecular weights from 100 to 100.000.

8. The separable fastener system according to any of claims 1 to 7, wherein the negative ionic compound grafted in the polymer surface of the second element are selected from a compound containing carboxylate, sulfonate or phosphate ions (**C**) and/or the positive ionic compound grafted in the polymer surface of the first element are selected from a compound containing amidinium groups (**A**), wherein the compound (**C**) and (**A**) are covalently bonded to the hydrophobic polymer.

9. Separable fastener system according to claim 8, wherein the compound carboxylate **C** has the general formula: 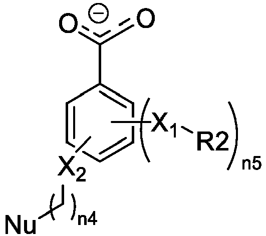 (X₁-R2)ₙ₅ substituents at ortho- or meta positions with respect to the carboxylate group, wherein:
n5 is an integer between 0 to 4, wherein:
X₁ is O, N or S,
R2 is selected from an c1-c6 alkyl group, phenyl, benzyl or fluorocarbon chain with formula CₙF₂ₙ₊₁ wherein n is an integer between 1 to 6;
and wherein X2-(CH₂)ₙ₄-Nu is a substituent at ortho-, meta- or para- position with respect to the carboxylate, preferably para-, wherein
Nu is selected from thiol (-SH), an alcohol (-OH) and an amine (-NH₂), more preferably thiol,
X₂ is selected from -CH₂-, - O-, -N-, and -S-, and
n4 is an integer between 1 to 12

10. The separable fastener system according to any of claims 8 to 11, wherein the compound **A** is a guanidinium or an amidinium derivative and has the general formula: 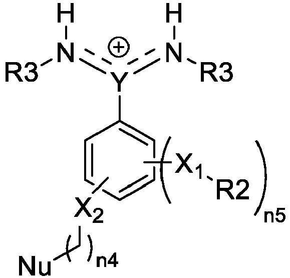 (X₁-R2)ₙ₅ substituents at ortho- or meta positions with respect to the amidinium/guanidinium group, wherein:
n5 is an integer between 0 to 4, wherein:
X1 is O, N or S,
R2 is selected from an c1-c6 alkyl group, phenyl, benzyl or fluorocarbon chain with formula CₙF₂ₙ₊₁ wherein n is an integer between to 6;
and wherein X2-(CH₂)ₙ₄-Nu is a substituent at *ortho-, meta-* or *para-* position with respect to the amidinium/guanidinium, preferably *para-,* wherein
Nu is selected from thiol (-SH), an alcohol (-OH) and an amine (NH2), more preferably thiol,
X₂ is selected from -CH₂-,- O-, -N-, and -S-,and
wherein Y = C or N; more preferably Y=C; and
wherein R3 is selected from hydrogen (H), c1-c6 alkyl group, phenyl or benzyl.

11. A process to obtain the separable fastener system described in claims 1-10, **characterized in that** it comprises the following steps:
I. synthesizing a polymer by a polymerization reaction, preferably the polymerization is an aqueous emulsion radical co-polymerization method; and
II. grafting a positive ionic compound or a negative ionic compound on the polymer obtained in step (I), wherein the grafting is selected from a grafting reaction in solution and grafting reaction on film surface.

12. The process according to claim 11, wherein the polymerization method of step (I) is aqueous emulsion radical polymerization method comprising the following steps:
a) adding monomer ratios from 0/100 to 100/0 to a solution containing the emulsifier in deionized water and purging the mixture with inert gas, preferably Argon;
b) heating the mixture obtained in (a) to a temperature of between 50 ºC and 80 ºC, and then injecting the initiator in a shot;
c) reacting for a time between 12 h and 36 h under constant stirring the heated mixture obtained in (b);
a) extracting the polymer or copolymers obtained in (c), concentrating, and then washing the polymer 2-3 times with methanol and filtering and dried under vacuum of between 100 and 1 mbar.

13. The process according to any of claims 11 or 12, wherein the step (b) of the present invention the grafting is the reaction on film surface comprising the following steps:
i. dissolving the copolymer obtained before in haloform and evaporating the haloform;
ii. adding the positive ionic compound or a negative ionic compound in methanol and dropwise adding to the copolymer of the step (a);
iii. reacting the mixture for at least 45 hours in a temperature of between 20 and 40 ºC in an inert atmosphere;
iv. washing with acidic methanol, methanol and drying under vacuum of between 100 and 1 mbar.

14. Use of the separable fastener system according to any of claims 1 to 10 as an adhesive coating of two different planar surfaces of different or identical nature element with weight up to 0.5 kg selected from metal, glass, or plastic.

15. An article comprising two substrates coated of the separable fastener system according to any claims 1 to 10, wherein the substrates are selected independently each one from glass, paper, wood, plastic, brick or metal.
